# FASCICULE DE BREVET EUROPEEN

(11) **EP 0 516 572 B1**
(45) Date de publication et mention de la délivrance du brevet: **09.10.1996**
(21) Numéro de dépôt: 92440064.1
(22) Date de dépôt: 29.05.1992
(51) Int. Cl.: G01D 5/249, G01D 5/244, G01D 5/34

(54) **Procédé de détermination pseudoabsolue de la position angulaire d'un axe et capteur autonome pour la mise en oeuvre de ce procédé**
Verfahren zur pseudoabsoluten Ermittlung des Winkels einer Welle und ein autonomer Sensor zur Durchführung dieses Verfahrens
Process for the pseudo-absolute determination of the angular position of a shaft and an autonomous sensor for performing the process

(30) Priorité: 31.05.1991 FR 9106704
(43) Date de publication de la demande: 02.12.1992
(73) Titulaire: IDEACOD-HOHNER AUTOMATION S.A., 67200 Eckbolsheim (FR)
(72) Inventeur: Michel, Ehrhart, 67000 Strasbourg (FR); Ernst, Charles, F-67000 Strasbourg (FR); Klotz, Roland, 67190 Dinsheim (FR); Stéphan, Pierre, 68000 Colmar (FR); Urban, Benoît, 67240 Oberhoffen/Moder (FR); Touil, Alain, 68230 Turckheim (FR)
(74) Mandataire: Nuss, Pierre

(56) Documents cités:
- DE-C- 3 415 091
- MACHINE DESIGN vol. 57, no. 20, 12 Septembre 1985, CLEVELAND,OHIO,USA pages 89 - 90; JEFF D. MONTGOMERY: 'optical shaft encoders'
- IBM TECHNICAL DISCLOSURE BULLETIN vol. 30, no. 3, Août 1987, ARMONK,NEW YORK,USA pages 1079 - 1080; 'pseduo absolute position encoder for electromechanical positioning devices'

## Description

La présente invention concerne le domaine du mesurage de précision, à très haute fiabilité, de mouvements, notamment de mouvements de rotation, et a pour objet un procédé de détermination pseudo-absolue de la position angulaire d'un axe ainsi qu'un capteur autonome pour sa mise en oeuvre.

Actuellement, il existe différents types de dispositifs de détermination des paramètres de mouvements, tels que, par exemple, génératrice tachymétrique, codeurs incrémentaux ou absolus, etc., mettant en oeuvre ou non des procédés de détermination spécifiques de ces paramètres.

Néanmoins, dans ces dispositifs connus les différents paramètres des mouvements sont, soit déterminés par différents dispositifs indépendants, soit élaborés à partir d'un unique signal physique, d'où il résulte une absence de synchronisme entre ces différents paramètres, ainsi qu'une fiabilité peu élevée en ce qui concerne l'exactitude des informations délivrées. Par ailleurs, ces dispositifs sont souvent encombrants, et, dans le cas de dispositifs électriques ou électroniques, nécessitent une alimentation externe en continu et ne disposent pas d'alimentations de secours intégrées à durée de vie importante.

Par le document "Optical shaft encoders", Jeff D. Montgomery, Machine Design, Vol. 57, n° 20, pages 89-90, 12 septembre 1985, on connaît un dispositif mettant en oeuvre un procédé présentant les caractéristiques mentionnées dans le préambule de la revendication 1.

Toutefois, la liaison entre le système indiquant la position absolue dans le tour et le système indiquant le nombre de tours effectués est réalisée par un réducteur mécanique encombrant, sujet à l'usure et entraînant nécessairement, à plus ou moins longue échéance, un décalage entre les informations délivrées par les deux systèmes précités.

En outre, ce dispositif ne mentionne pas une restitution synchrone des données issues des deux systèmes précités.

Par le document DE-C-3 415 091, on connaît un dispositif de mesure de la position angulaire relative de deux objets, notamment d'un axe monté avec faculté de rotation dans un boîtier fixe, par l'intermédiaire de deux disques codés mobiles et d'un disque annulaire fixe, coopérant avec un capteur solidaire du boîtier fixe et avec un capteur monté mobile sur l'axe.

Ce dispositif permet en particulier, après perte de l'information de position relative, de fournir une position de référence sans nécessiter de mouvement relatif des deux objets entre eux.

Néanmoins, ce dispositif ne fournit pas deux informations indépendantes relatives, respectivement, à la position dans le tour et au nombre de tours effectués. De plus, il présente une constitution extrêmement complexe.

Enfin, par le document IBM TECHNICAL DISCLOSURE BULLETIN, Vol. 30, n° 3, pages 1079-1080, août 1987, on connaît un capteur incrémental avec comptage par microprocesseur et sauvegarde par batterie, réalisant une lecture unique sur un disque incrémental dont l'information résultante est convertie en une information absolue.

Toutefois, ce document ne donne aucune indication sur la fourniture de deux informations distinctes relatives l'une au nombre de tours et l'autre à la position dans le tour.

La présente invention a pour but de pallier les inconvénients précités.

A cet effet, elle a pour objet un procédé de détermination pseudo-absolue de la position angulaire d'un axe en rotation, consistant, après initialisation, d'une part, à relever et à restituer, en continu, la position absolue dans le tour, l'information relevée étant mise en forme et, le cas échéant, transcodée avant sa restitution, et, d'autre part, à relever et à prendre en compte, indépendamment, des signaux de comptage du nombre de tours, caractérisé en ce qu'il consiste, d'une part, à relever la position absolue dans le tour au moyen d'un disque multipiste codé, solidaire de l'axe, et d'une cellule de lecture multipiste correspondante, et, d'autre part, à relever et à prendre en compte les signaux de comptage du nombre de tours par l'intermédiaire d'un disque pourvu d'au moins une piste codée, également solidaire de l'axe mais dont l'origine est décalée par rapport à celle du disque multipiste, et d'au moins une cellule de lecture reliée à un module de comptage/décomptage, le sens de rotation étant déduit de l'ordre de succession des signaux de comptage relevés et l'information résultante relative au nombre de tours effectués étant préparée par anticipation et restituée en synchronisme avec l'information relative à la position absolue.

L'invention a également pour objet un capteur autonome de position angulaire, multitour et pseudo-absolu, mettant en oeuvre le procédé décrit ci-dessus, caractérisé en ce qu'il est essentiellement constitué par un dispositif de détermination de la position absolue dans le tour, avec un disque multipiste codé, solidaire de l'axe, et une cellule de lecture multipiste correspondante, par un dispositif de détermination du sens de rotation et de comptage du nombre de tours, indépendant du premier dispositif, avec un disque pourvu d'au moins une piste codée, également solidaire de l'axe mais dont l'origine est décalée par rapport à celle du disque multipiste, et d'au moins une cellule de lecture reliée à un module de comptage/décomptage, par un dispositif d'interface pour le codage des informations issues des deux dispositifs précédents et la délivrance de signaux adaptés correspondants et, enfin, par un dispo-sitif d'alimentation autonome et de sauvegarde, les données relatives au nombre de tours étant interprétées par une unité de traitement, en fonction notamment, de données délivrées par le dispositif de détermination de la position absolue, l'information résultante relative au nombre de tours effectués étant préparée par anticipation de manière à permettre de synchroniser les informations issues des deux dispositifs de détermination.

L'invention sera mieux comprise grâce à la description ci-après, qui se rapporte à un mode de réalisation préféré, donné à titre d'exemple non limitatif, et expliqué avec référence aux dessins schématiques annexés, dans lesquels :
la figure 1 est un schéma synoptique du capteur conforme à l'invention,
la figure 2 est une vue éclatée en perspective du capteur représenté à la figure 1,
la figure 3 est une vue schématique en élévation latérale du capteur conforme à l'invention, et
la figure 4 est une vue schématique du positionnement des deux disques codés faisant partie du capteur conforme à l'invention.

Conformément à l'invention, le procédé de détermination pseudo-absolue de la position angulaire d'un axe 2 en rotation consiste, après initialisation, d'une part, à relever et à restituer, en continu, la position absolue dans le tour, l'information relevée étant mise en forme et, le cas échéant, transcodée avant sa restitution, et, d'autre part, à relever et à prendre en compte, indépendamment, des signaux de comptage du nombre de tours.

Le procédé consiste, plus précisément, d'une part, à relever la position absolue dans le tour au moyen d'un disque multipiste 3 codé, par exemple en Gray, solidaire de l'axe 2, et d'une cellule de lecture multipiste 4 correspondante, et, d'autre part, à relever et à prendre en compte les signaux de comptage du nombre de tours par l'intermédiaire d'un disque 5 pourvu d'au moins une piste 6, 6' codée, par exemple en Gray, également solidaire de l'axe 2 mais dont l'origine est décalée par rapport à celle du disque multipiste 3, et d'au moins une cellule de lecture 7, 7' reliée à un module 8 de comptage-décomptage, le sens de rotation étant déduit de l'ordre de succession des signaux de comptage relevés et l'information résultante relative au nombre de tours effectués étant préparée par anticipation et restituée en synchronisme avec l'information relative à la position absolue.

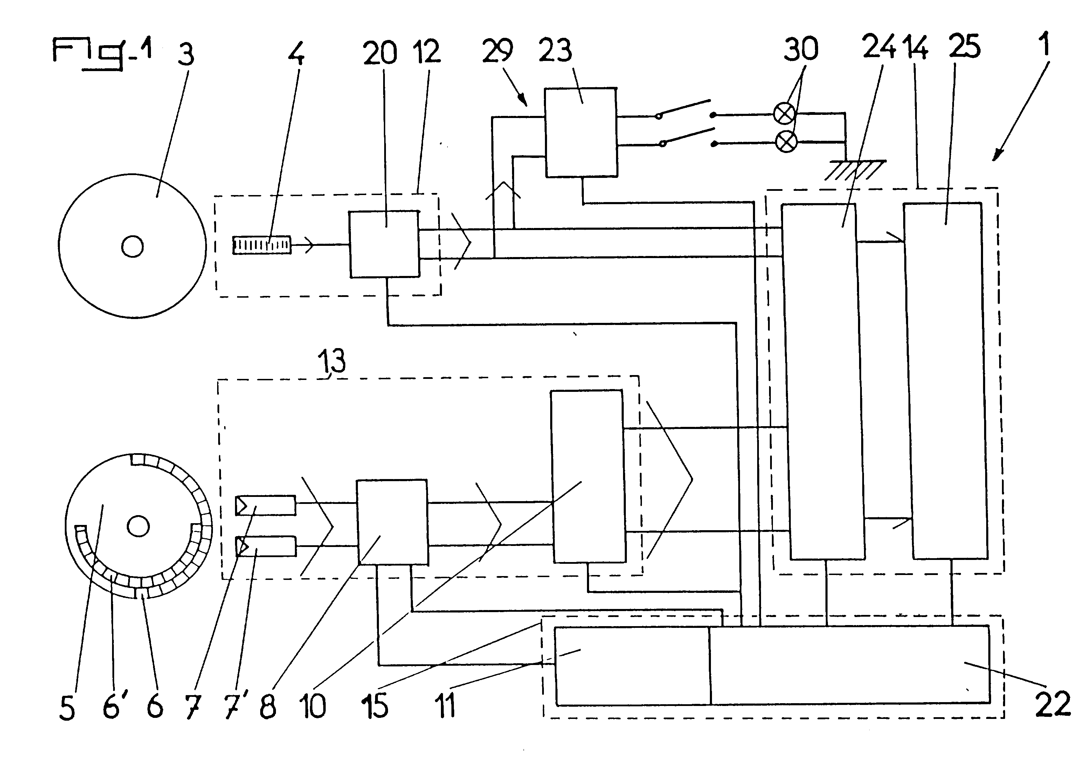

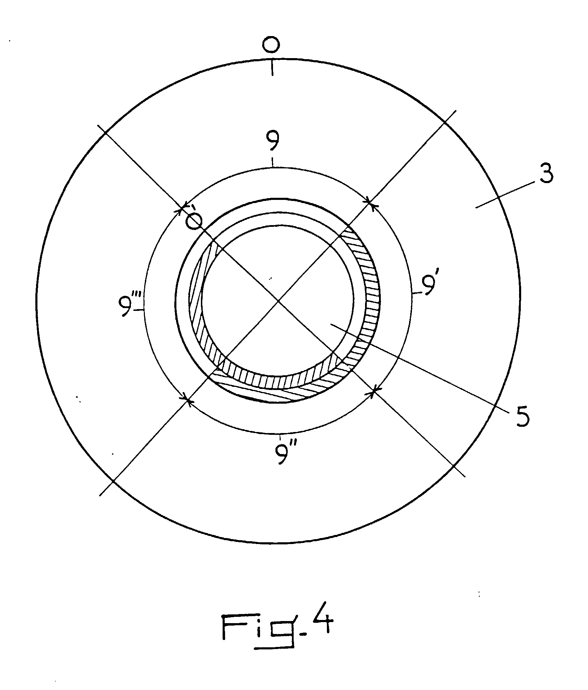

Comme le montrent les figures 1 et 4 des dessins annexés, le codage du disque 5, pourvu, par exemple, de deux pistes, permet de découper ce dernier en quatre secteurs angulaires distincts 9, 9', 9" et 9"', caractérisés, chacun, par une donnée codée spécifique, et dont l'ordre de succession indique le sens physique de rotation de l'axe 2, le passage des cellules de lecture 7, 7' d'un secteur angulaire à un autre, lors de la rotation du disque 5 à deux pistes, donnant lieu à un changement d'état de la sortie de l'une des deux cellules 7, 7' .

Chaque tour complet de l'axe 2 et donc du disque 5 à deux pistes est ainsi pris en compte par le module 8 de comptage-décomptage sous forme de quatre impulsions, correspondant, chacune, au passage d'un secteur angulaire 9, 9', 9" ou 9"', au secteur angulaire suivant 9"', 9, 9' ou 9" ou encore 9', 9", 9"' ou 9, suivant le sens de rotation de l'axe 2. L'origine du disque multipiste 3 étant décalée par rapport à celle du disque 5 à deux pistes, celle-ci se situe dans un des secteurs angulaires 9, 9', 9" ou 9"' dudit disque 5 à deux pistes, l'occurrence de ce secteur angulaire (secteur angulaire 9 sur la figure 4) permettant de prévoir le passage imminent par l'origine dudit disque multipiste 3.

La synchronisation de l'information relative au nombre de tours effectués avec l'information relative à la position dans le tour consiste, grâce au disque 5, découpé en secteurs angulaires 9, 9' ; 9", 9"' du fait de son codage, à relever, à l'aide d'une unité de traitement 10 reliée au module 8 de comptage-décomptage, l'imminence d'un passage par l'origine du disque multipiste 3, à préparer l'information relative au nombre de tours, en fonction des données stockées dans le module 8 de comptage-décomptage, du sens de rotation de l'axe 2 et du mode de comptage de l'utilisateur, puis à surveiller le passage par l'origine du disque multipiste 3, à délivrer l'information relative au nombre de tours lors dudit passage par l'origine, le cas échéant après transcodage, et, enfin, à répéter les opérations précédentes pendant toute la durée de mise en oeuvre du procédé.
Le contenu de l'information relative au nombre de tours peut, par conéquent, être adapté au code spécifique utilisé par les dispositifs extérieurs exploitant les informations délivrées, ainsi qu'au mode de comptage, à savoir, soit horaire, soit anti-horaire.

La phase d'initialisation dudit procédé consiste, au début de la mise en oeuvre de ce dernier, suite à un arrêt ou à une interruption involontaire de son déroulement, à prendre en compte les données stockées dans le module 8 de comptage-décomptage relié à une alimentation de sauvegarde 11, à préparer, à partir de ces données, l'information relative au nombre de tours en fonction du système de comptage de l'utilisateur et de la position absolue dans le tour, et, enfin, à restituer l'information relative au nombre de tours, le cas échéant après transcodage, la position absolue dans le tour étant délivrée de manière indépendante, en continu, dès la mise en oeuvre dudit procédé. Du fait du comptage du nombre de tours par l'intermédiaire d'un disque 5 découpé en secteurs angulaires 9, 9' ; 9", 9"', il peut éventuellement subsister un doute quant au bouclage complet du dernier tour pris en compte par le module 8. Ce doute est, le cas échéant, levé grâce aux données relevées sur le disque multipiste 3, lors de la phase d'initialisation.

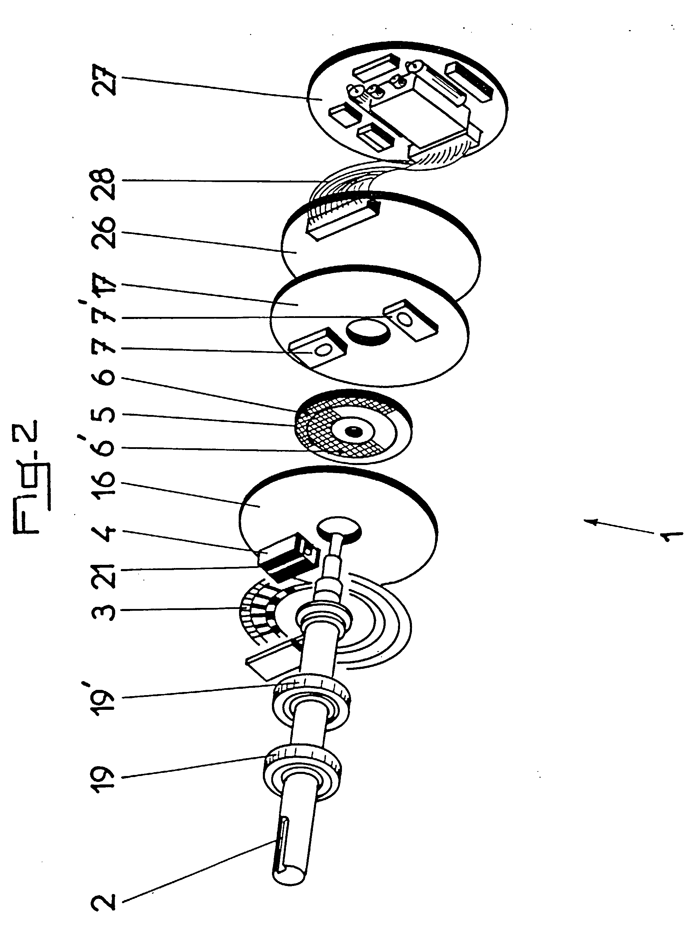

L'invention a également pour objet un capteur autonome de position angulaire, multitour et pseudo-absolu, mettant en oeuvre le procédé décrit ci-dessus, capteur essentiellement constitué par un dispositif 12 de détermination de la position absolue dans le tour, par un dispositif 13 de détermination du sens de rotation et de comptage du nombre de tours, indépendant du premier dispositif 12, par un dispositif d'interface 14 pour le codage des informations issues des deux dispositifs 12 et 13 précédents et la délivrance de signaux adaptés correspondants et, enfin, par un dispositif 15 d'alimentation autonome et de sauvegarde, les données relatives au nombre de tours étant interprétées par une unité de traitement 10, en fonction notamment, de données délivrées par le dispositif 12 de détermination de la position absolue, l'information résultante relative au nombre de tours effectués étant préparée par anticipation de manière à permettre de synchroniser les informations issues des deux dispositifs de détermination 12 et 13 (Figure 1 et Figure 2).

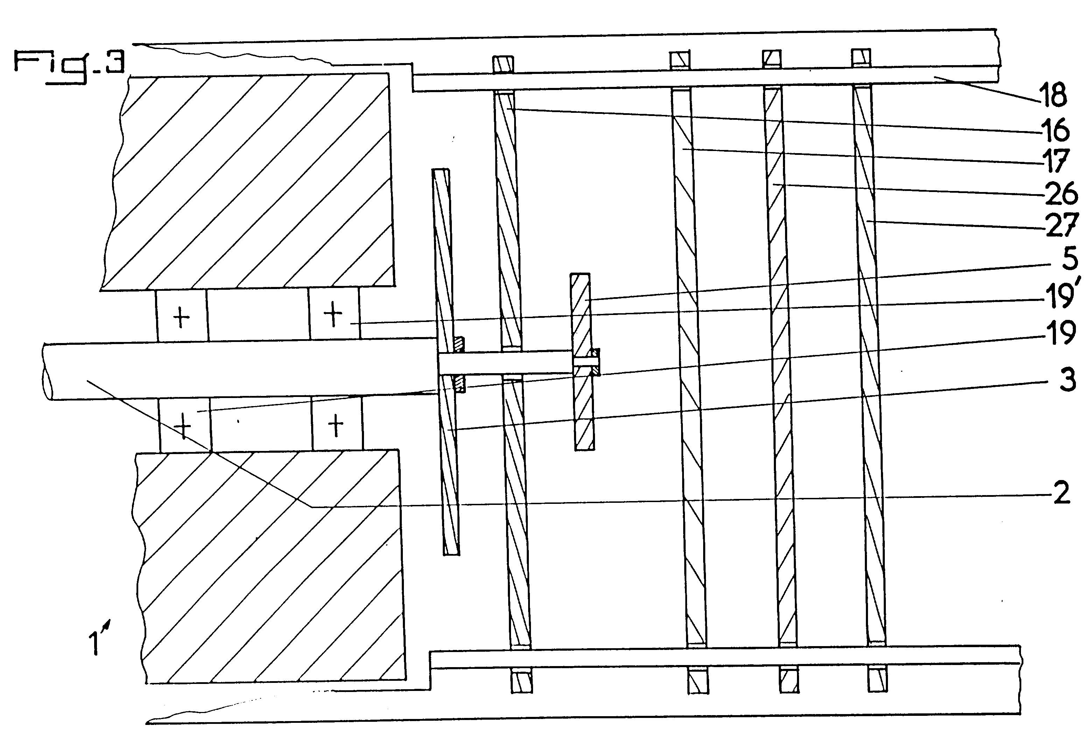

Plus particulièrement aux figures 1 à 3 des dessins annexés, les dispositifs de détermination 12 et 13 sont composés, chacun, d'une part, d'un disque codé mobile 3, 5, solidaire de l'axe 2 du capteur 1, et, d'autre part, d'une carte électronique fixe 16, 17, solidaire du bâti 18 du capteur 1, et comportant un dispositif de lecture 4, 7, 7' du disque codé 3, 5 correspondant, ainsi qu'un dispositif 8, 10, 20 de conversion et/ou de prise en compte et de traitement des données lues, ledit axe 2 étant monté libre en rotation sur le bâti 18 au moyen d'au moins un palier glissant 19, 19', avantageusement précontraint.

Comme le montrent les figures 1 et 2 des dessins annexés, le dispositif 12 de détermination de la position dans le tour est constitué, d'une part, par un disque multipiste 3 codé, par exemple en Gray et, d'autre part, par une cellule de lecture multipiste 4, par exemple optoélectronique, et, le cas échéant, par un module 20 de mise en forme et de transcodage de l'information lue, disposés sur la carte électronique 16, les informations issues de ce dispositif 12 étant transférées directement et en continu vers le dispositif d'interface 14.

En ce qui concerne le dispositif 13 de détermination du sens de rotation et de comptage du nombre de tours, il est composé, d'une part, d'un disque codé 5 à au moins une piste, codé par exemple en Gray, et, d'autre part, d'au moins une cellule de lecture 7, 7', à très faible consommation, reliée à un module 8 de comptage-décomptage, dont le contenu est relevé périodiquement par l'unité de traitement 10, cette dernière transmettant l'information relative au nombre de tours, au dispositif d'interface 14, à chaque passage du disque multipiste 3 par son origine O.

Le disque 5 pourra, par exemple, se présenter sous la forme d'un disque diélectrique, la ou les cellules de lecture 7 et 7′ étant alors une ou des cellules de lecture capacitives.

Représentée notamment à la figure 4 des dessins annexés, l'origine O′ du disque 5 est décalée en rotation par rapport à l'origine O du disque multipiste 3, permettant à l'unité de traitement 10, en fonction du contenu du module 8 de comptage-décomptage et du sens de rotation de l'axe 2, de déterminer de manière approximative la position de l'axe 2 dans le tour et de préparer, le cas échéant, l'information relative au nombre de tours, avant chaque passage par l'origine du disque multipiste 3. Par l'expression "passage par l'origine du disque multipiste 3", il faut entendre le passage de l'origine O dudit disque multipiste 3 par une position fixe de référence de comptage, représentée en pratique par la fente de lecture 21 de la cellule de lecture multipiste 4.

Comme le montrent les figures 1 et 2 des dessins annexés, le dispositif 15 d'alimentation autonome et de sauvegarde comprend, d'une part, un accumulateur d'énergie électrique rechargeable 22 à niveau contrôlé, pourvu, le cas échéant, d'un bloc transformateur et régulateur d'alimentation, et, d'autre part, un dispositif d'alimentation de secours 11 longue durée, pouvant alimenter le dispositif 13 de détermination du sens de rotation et de comptage du nombre de tours lorsque le niveau de charge de l'accumulateur d'énergie électrique 22 chute en dessous d'un seuil critique. La durée de vie du dispositif d'alimentation de secours 11, qui peut avantageusement être une pile au lithium ou à combustibles, est de préférence supérieure à la durée de vie des paliers glissants précontraints 19, 19′ . Le dispositif 15 est, en outre, pourvu d'un dispositif de surveillance et d'alarme de chute de tension au niveau de l'accumulateur électrique 22.

Le dispositif d'interface 14 est avantageusement constitué, d'une part, par des dispositifs 24 assurant le transcodage et, d'autre part, par un étage de sortie 25 permettant l'adaptation des signaux informatifs de sortie du capteur 1. Ces dispositifs pourraient avantageusement être des dispositifs électroniques, en particulier programmables.

Selon une caractéristique de l'invention, le dispositif d'interface 14 est programmable, au moyen d'une console externe par exemple, au niveau de la résolution dans le tour et/ou au niveau du nombre maximum de tours à afficher.

Le dispositif d'interface 14 pourra également présenter un ou plusieurs seuils programmables, réalisés, par exemple, au moyen de fonctions numériques du type "égalité", "inférieur ou égal à" et/ou "supérieur ou égal à". Le capteur 1 pourra, en outre, après transcodage analogique délivrer des informations relatives à une position, à une vitesse, à une accélération et/ou à un écart par rapport à une consigne.

Comme le montrent les figures 1 à 3 des dessins annexés, le dispositif d'interface 14 et le dispositif 15 d'alimentation et de sauvegarde sont également montés sur une ou plusieurs cartes électroniques 26, 27 fixes, toutes les cartes électroniques 16, 17, 26 et 27 étant reliées entre elles et présentant une configuration adaptée à celle du bâti 18 du capteur 1 de manière à réaliser une structure compacte. Les liaisons 28 entre lesdites cartes électroniques 16, 17, 26 et 27 peuvent être soit du type souple, soit du type rigide.

Conformément à une caractéristique supplémentaire de l'invention, représentée à la figure 1 des dessins annexés, le capteur 1 est également pourvu d'un dispositif 29 de calage de l'origine O à au moins deux niveaux d'approximation, muni de voyants de signalisation 30 de l'approximation et de la réalisation du calage, reliés à un module comparateur 23. Par ailleurs, ledit capteur 1 comporte une ligne de remise à zéro du module 8 de comptage-décomptage, utilisé au début de chaque nouveau cycle de comptage.

Grâce à l'invention, il est donc possible de réaliser un capteur autonome de position angulaire multitour fonctionnant avec une très grande fiabilité, du fait, notamment, d'un filtrage numérique des signaux de comptage et d'une autonomie de fonctionnement, même en cas de coupure d'alimentation, très importante. En outre, ce capteur du fait du procédé de détermination mis en oeuvre, présente une structure simple et compacte, ainsi qu'une grande souplesse d'utilisation et une adaptabilité aisée à différents modes de comptage.

## Revendications

1. Procédé de détermination pseudo-absolue de la position angulaire d'un axe en rotation, consistant, après initialisation, d'une part, à relever et à restituer, en continu, la position absolue dans le tour, l'information relevée étant mise en forme et, le cas échéant, transcodée avant sa restitution, et, d'autre part, à relever et à prendre en compte, indépendamment, des signaux de comptage du nombre de tours, caractérisé en ce qu'il consiste, d'une part, à relever la position absolue dans le tour au moyen d'un disque multipiste (3) codé, solidaire de l'axe (2), et d'une cellule de lecture multipiste (4) correspondante, et, d'autre part, à relever et à prendre en compte les signaux de comptage du nombre de tours par l'intermédiaire d'un disque (5) pourvu d'au moins une piste (6, 6') codée, également solidaire de l'axe (2) mais dont l'origine est décalée par rapport à celle du disque multipiste (3), et d'au moins une cellule de lecture (7, 7') reliée à un module (8) de comptage/décomptage, le sens de rotation étant déduit de l'ordre de succession des signaux de comptage relevés et l'information résultante relative au nombre de tours effectués étant préparée par anticipation et restituée en synchronisme avec l'information relative à la position absolue.

2. Procédé selon la revendication 1, caractérisé en ce qu'il consiste, grâce au disque (5) dont la ou les pistes sont découpées en secteurs angulaires (9, 9' ; 9", 9"') du fait de son codage, à relever, à l'aide d'une unité de traitement (10) reliée au module (8) de comptage-décomptage, l'imminence d'un passage par l'origine du disque multipiste (3), à préparer l'information relative au nombre de tours, en fonction des données stockées dans le module (8) de comptage-décomptage, du sens de rotation de l'axe (2) et du mode de comptage de l'utilisateur, puis à surveiller le passage par l'origine du disque multipiste (3), à délivrer l'information relative au nombre de tours lors dudit passage par l'origine, le cas échéant après transcodage, et, enfin, à répéter les opérations précédentes pendant toute la durée de mise en oeuvre du procédé.

3. Procédé selon l'une quelconque des revendications 1 et 2, caractérisé en ce que l'initialisation consiste, en début de mise en oeuvre, suite à un arrêt ou à une interruption involontaire de son déroulement, à prendre en compte les données stockées dans le module (8) de comptage-décomptage relié à une alimentation de sauvegarde (11), à préparer, à partir de ces données, l'information relative au nombre de tours en fonction du système de comptage de l'utilisateur et de la position absolue dans le tour, et, enfin, à restituer l'information relative au nombre de tours, le cas échéant après transcodage, la position absolue dans le tour étant délivrée de manière indépendante, en continu, dès la mise en oeuvre dudit procédé.

4. Capteur autonome de position angulaire, multitour et pseudo-absolu, mettant en oeuvre le procédé selon l'une quelconque des revendications 1 à 3, caractérisé en ce qu'il est essentiellement constitué par un dispositif (12) de détermination de la position absolue dans le tour, avec un disque multipiste (3) codé, solidaire de l'axe (2), et une cellule de lecture multipiste (4) correspondante, par un dispositif (13) de détermination du sens de rotation et de comptage du nombre de tours, indépendant du premier dispositif (12) avec un disque (5) pourvu d'au moins une piste (6,6') codée, également solidaire de l'axe (2) mais dont l'origine est décalée par rapport à celle du disque multipiste (3), et d'au moins une cellule de lecture (7,7') reliée à un module de comptage/décomptage, par un dispositif d'interface (14) pour le codage des informations issues des deux dispositifs (12 et 13) précédents et la délivrance de signaux adaptés correspondants et, enfin, par un dispositif (15) d'alimentation autonome et de sauvegarde, les données relatives au nombre de tours étant interprétées par une unité de traitement (10), en fonction notamment, de données délivrées par le dispositif (12) de détermination de la position absolue, l'information résultante relative au nombre de tours effectués étant préparée par anticipation de manière à permettre de synchroniser les informations issues des deux dispositifs de détermination (12 et 13).

5. Capteur selon la revendication 4, caractérisé en ce que les dispositifs de détermination (12 et 13) comprennent un dispositif (8, 10, 20) de conversion et/ou de prise en compte et de traitement des données lues, ledit axe (2) étant monté libre en rotation sur un bâti (18) au moyen d'au moins un palier glissant (19, 19') avantageusement précontraint.

6. Capteur selon la revendication 5, caractérisé en ce que les informations issues du dispositif (12) de détermination de la position absolue dans le tour étant transférées directement et en continu vers le dispositif d'interface (14).

7. Capteur selon la revendication 5, caractérisé en ce que le continu du module (8) de comptage-décomptage, est relevé périodiquement par l'unité de traitement (10), cette dernière transmettant l'information relative au nombre de tours, au dispositif d'interface (14), à chaque passage du disque multipiste (3) par son origine (O).

8. Capteur selon l'une quelconque des revendications 5 à 7, caractérisé en ce que l'origine (O′) du disque (5), décalée en rotation par rapport à l'origine (O) du disque multipiste (3), permet à l'unité de traitement (10), en fonction du contenu du module (8) de comptage-décomptage et du sens de rotation de l'axe (2), de déterminer de manière approximative la position de l'axe (2) dans le tour et de préparer, le cas échéant, l'information relative au nombre de tours, avant chaque passage par l'origine du disque multipiste (3).

9. Capteur selon l'une quelconque des revendications 4 à 8, caractérisé en ce que le dispositif (15) d'alimentation autonome et de sauvegarde comprend, d'une part, un accumulateur d'énergie électrique rechargeable (22) à niveau contrôlé, pourvu, le cas échéant, d'un bloc transformateur et régulateur d'alimentation, et, d'autre part, un dispositif d'alimentation de secours (11) longue durée, pouvant alimenter le dispositif (13) de détermination du sens de rotation et de comptage du nombre de tours lorsque le niveau de charge de l'accumulateur d'énergie électrique (22) chute en dessous d'un seuil critique.

10. Capteur selon l'une quelconque des revendications 4 à 9, caractérisé en ce que le dispositif d'interface (14) est constitué, d'une part, par des dispositifs (24) assurant le transcodage et, d'autre part, par un étage de sortie (25) permettant l'adaptation des signaux informatifs de sortie du capteur (1).

11. Capteur autonome de position angulaire, selon l'une quelconque des revendications 4 à 10, caractérisé en ce que le dispositif d'interface (14) est programmable, au moyen d'une console externe par exemple, au niveau de la résolution dans le tour et/ou au niveau du nombre maximum de tours à afficher.

12. Capteur autonome de position angulaire, selon l'une quelconque des revendications 4 à 11, caractérisé en ce que le dispositif d'interface (14) présente des seuils programmables.

13. Capteur selon l'une quelconque des revendications 5 à 12, caractérisé en ce que le dispositif d'interface (14) et le dispositif (15) d'alimentation et de sauvegarde sont également montés sur une ou plusieurs cartes électroniques (26, 27) fixes, toutes les cartes électroniques (16, 17, 26 et 27) étant reliées entre elles et présentant une configuration adaptée à celle du bâti (18) du capteur (1) de manière à réaliser une structure compacte.

14. Capteur selon l'une quelconque des revendications 4 à 13, caractérisé en ce qu'il est également pourvu d'un dispositif (29) de calage de l'origine (O) à au moins deux niveaux d'approximation, muni de voyants de signalisation (30) de l'approximation et de la réalisation du calage, reliés à un module comparateur (23).

## Patentansprüche

1. Verfahren zur pseudoabsoluten Ermittlung des Winkels einer Rotierenden Welle, das, nach Initialisierung, einerseits darin besteht, die absolute Position in der Umdrehung kontinuierlich abzulesen und wieder herzustellen, wobei die erhaltene Information in Form gebracht und gegebenenfalls vor ihrer Wiederherstellung umcodiert wird, und andererseits darin besteht, die Zählsignale der Anzahl der Umdrehungen unabhängig abzulesen und zu berücksichtigen, dadurch gekennzeichnet, daß es einerseits darin besteht, die absolute Position in der Umdrehung mittels einer mit der Welle (2) drehfesten codierten Mehrspurscheibe und einer entsprechenden Mehrspurlesezelle (4), und andererseits die Zählsignale der Anzahl der Umdrehungen mittels einer mit mindestens einer codierten Spur (6, 6') versehenen Scheibe abzulesen und zu berücksichtigen, die ebenfalls mit der Welle drehfest ist, aber deren Nullpunkt gegenüber der Zelle der Mehrspurscheibe (3) versetzt ist, und mittels mindestens einer Lesezelle (7, 7'), die mit einem Zähl-/Herunterzählmodul (8) verbunden ist, wobei die Umdrehungsrichtung von der Reihenfolge der abgelesenen Zählsignale abgeleitet wird und die sich auf die Umdrehungsanzahl beziehende resultierende Information durch Vorwegnahme vorbereitet und synchron mit der sich auf die absolute Position beziehenden Information wieder hergestellt wird.

2. Verfahren nach Anspruch 1, dadurch gekennzeichnet, daß es dank der Scheibe (5), deren Spur bzw. Spuren aufgrund ihrer Codierung in winklige Sektoren (9, 9', 9", 9"') eingeteilt sind, darin besteht, mit Hilfe einer Behandlungseinheit (10), die mit dem Zähl-Herabzähl-Modul (8) verbunden ist, das Bevorstehen eines Vorbeigehens am Nullpunkt der Mehrspurscheibe (3) abzulesen, die Information über die Anzahl der Umdrehungen vorzubereiten, abhängig von den im Zähl-Herabzähl-Modul (8) gespeicherten Werten, der Drehrichtung der Welle (2) und der Zählart des Abnehmers, dann darin besteht, das Vorbeigehen durch den Nullpunkt der Mehrspurscheibe (3) zu überwachen, die Information über die Anzahl der Umdrehungen während des Vorbeigehens am Nullpunkt zu liefern, gegebenenfalls nach Umcodierung, und schließlich, die vorangehenden Vorgänge während der gesamten Dauer der Durchführung des Verfahrens zu wiederholen.

3. Verfahren nach Anspruch 1 oder 2, dadurch gekennzeichnet, daß die Initialisierung am Anfang der Durchführung nach einem unbeabsichtigten Anhalten oder einer Unterbrechung seiner Abwicklung darin besteht, die im mit einer Notversorgung (11) verbundenen Zähl-Herabzähl-Modul (8) gespeicherten Werte zu berücksichtigen, aufgrund dieser Werte die Information über die Anzahl der Umdrehungen als Funktion des Zählsystems des Benutzers und der absoluten Position in der Umdrehung vorzubereiten, und schließlich darin besteht, die Information über die Anzahl der Umdrehungen wiederherzustellen, gegebenenfalls nach Umcodierung, wobei die absolute Position in der Umdrehung unabhängig kontinuierlich ab Beginn der Durchführung des genannten Verfahrens geliefert wird.

4. Autonomer Sensor der Winkelposition, für viele Umdrehungen und pseudoabsolut, zur Durchführung des Verfahrens nach einem der Ansprüche 1 bis 3, dadurch gekennzeichnet, daß er im wesentlichen gebildet wird von einer Vorrichtung (12) zur Bestimmung der absoluten Position in der Umdrehung mit einer codierten Mehrspurscheibe (3), drehfest verbunden mit der Welle (2), und einer entsprechenden Mehrspur-Lesezelle, von einer Vorrichtung (13) zur Bestimmung der Umdrehungsrichtung und zur Zählung der Anzahl von Umdrehungen, unabhängig von der ersten Vorrichtung (12) mit einer Scheibe (5), die mit mindestens einer codierten Spur (6, 6') versehen und ebenfalls drehfest mit der Welle (2) verbunden ist, aber deren Nullpunkt in bezug auf den der Mehrspurscheibe (3) versetzt ist, und mindestens einer mit dem Zähl-Herabzähl-Modul verbundenen Lesezelle (7, 7'), von einer Schnittstellenvorrichtung (14) für die Codierung der von den zwei vorangehenden Vorrichtungen (12 und 13) herausgegebenen Informationen und für die Lieferung von entsprechenden angepaßten Signalen und schließlich von einer Vorrichtung (15) zur autonomen Notversorgung, wobei die sich auf die Anzahl der Umdrehungen beziehenden Werte von einer Behandlungseinheit (10) interpretiert werden, insbesondere abhängig von durch die Vorrichtung (12) zur Bestimmung der absoluten Position gelieferten Werten, wobei die resultierende Information über die Anzahl von erfolgten Umdrehungen durch Vorwegnahme vorbereitet wird, um es zu ermöglichen, die von den zwei Bestimmungsvorrichtungen (12 und 13) herausgegebenen Informationen zu synchronisieren.

5. Sensor nach Anspruch 4, dadurch gekennzeichnet, daß die Bestimmungsvorrichtungen (12 und 13) eine Vorrichtung (8, 10, 20) zur Umwandlung und/oder Berücksichtigung und zur Behandlung der gelesenen Werte aufweisen, wobei die besagte Welle (2) frei in Rotation auf einem Gestell mittels mindestens eines vorzugsweise vorgespannten Gleitlagers (19, 19') montiert ist.

6. Sensor nach Anspruch 5, dadurch gekennzeichnet, daß die von der Vorrichtung (12) zur Bestimmung der absoluten Position in der Umdrehung herausgegebenen Informationen direkt und kontinuierlich zur Schnittstellenvorrichtung (14) geleitet werden.

7. Sensor nach Anspruch 5, dadurch gekennzeichnet, daß der Inhalt des Zähl-Herabzähl-Moduls (8) von der Behandlungseinheit (10) periodisch abgelesen wird, wobei diese die Information über die Anzahl der Umdrehungen an die Schnittstellenvorrichtung (14) bei jedem Vorbeigehen der Mehrspurscheibe (3) an ihrem Nullpunkt weiterleitet.

8. Sensor nach einem der Ansprüche 5 bis 7, dadurch gekennzeichnet, daß der Nullpunkt (O') der Scheibe (5), der in Rotation gegenüber dem Nullpunkt (O) der Mehrspurscheibe (3) versetzt ist, es der Behandlungseinheit (10), abhängig von dem Inhalt des Zähl-Herabzähl-Moduls (8) und von der Umdrehungsrichtung der Welle (2), ermöglicht, die Position der Welle (2) in der Umdrehung ungefähr zu bestimmen und gegebenenfalls die Information über die Anzahl der Umdrehungen vorzubereiten, vor jedem Vorbeigehen am Nullpunkt der Mehrspurscheibe (3).

9. Sensor nach einem der Ansprüche 4 bis 8, dadurch gekennzeichnet, daß die autonome Notversorgungseinrichtung einerseits einen in kontrollierter Höhe wiederaufladbaren Akkumulator für elektrische Energie, der gegebenenfalls mit einem Transformations- und Regulier-Versor-gungsblock versehen ist, aufweist, und andererseits eine Langzeitsicherheits-Versorgungsvorrichtung (11), die die Vorrichtung (13) zur Bestimmung der Umdrehungsrichtung und zur Zählung der Umdrehungsanzahl versorgen kann, wenn der Aufladungspegel des Akkumulators (22) für elektrische Energie unter eine kritische Schwelle fällt.

10. Sensor nach einem der Ansprüche 4 bis 9, dadurch gekennzeichnet, daß die Schnittstellenvorrichtung (14) einerseits gebildet wird von Vorrichtungen (24), die die Umcodierung sichern, und andererseits von einer Ausgangsstufe (25), die die Anpassung der Informationssignale des Sensorausgangs (1) ermöglicht.

11. Autonomer Sensor für eine Winkelposition nach einem der Ansprüche 4 bis 10, dadurch gekennzeichnet, daß die Schnittstellenvorrichtung (14) mittels einer externen Konsole programmierbar ist, beispielsweise auf Höhe der Auflösung in der Umdrehung und/oder auf Höhe der Höchstanzahl an anzuzeigenden Umdrehungen.

12. Autonomer Sensor für eine Winkelposition nach einem der Ansprüche 4 bis 11, dadurch gekennzeichnet, daß die Schnittstellenvorrichtung (14) die programmierbaren Schwellen aufweist.

13. Sensor nach einem der Ansprüche 5 bis 12, dadurch gekennzeichnet, daß die Schnittstellenvorrichtung (14) und die Notversorgungsvorrichtung (15) ebenfalls auf einer oder mehreren festen elektronischen Karten (26, 27) montiert sind, wobei alle elektronischen Karten (16, 17, 26 und 27) miteinander verbunden sind und eine Konfiguration aufweisen, die an die des Gestells (18) des Sensors (1) so angepaßt ist, daß sie eine kompakte Struktur bilden.

14. Sensor nach einem der Ansprüche 4 bis 13, dadurch gekennzeichnet, daß ebenfalls eine Vorrichtung (29) zur Einstellung des Nullpunkts (O) auf mindestens zwei Annäherungspegel vorgesehen ist, versehen mit Kontrolllichtern (30) zur Signalisierung der Annäherung und der Durchführung der Einstellung, die mit einem Vergleichsmodul (23) verbunden sind.

## Claims

1. Process for the pseudo-absolute determination of the angular position of a rotating shaft, involving, after initialization, on the one hand continuously recording and outputting the absolute position in the revolution, the recorded information being shaped and, if necessary, transcoded before being output and, on the other hand, recording and recognising independently the signals for counting the number of revolutions, characterized in that it involves, on the one hand, recording the absolute position in the revolution by means of a coded multitrack disk (3) integral with the shaft (2) and of a corresponding multitrack reading cell (4) and, on the other hand, recording and recognising the signals for counting the number of revolutions by means of a disk (5) provided with at least one coded track (6,6'), also integral with the shaft (2) but of which the origin is offset from that of the multitrack disk (3), and with at least one reading cell (7,7') connected to an up-counting and down-counting module (8), the direction of rotation being deduced from the order of succession of the recorded counting signals and the resultant information relating to the number of revolutions performed being prepared by anticipation and being output synchronously with the information relating to the absolute position.

2. Process according to claim 1, characterized in that, owing to the disk (5) of which the track or tracks are split into angular sectors (9,9';9",9"') owing to its coding, it involves recording, by means of a processing unit (10) connected to the up-counting and down-counting module (8), the imminence of a passage through the origin of the multitrack disk (3), preparing the information relating to the number of revolutions as a function of the data stored in the up-counting and down-counting module (8), of the direction of rotation of the shaft (2) and of the user's method of counting, then monitoring the passage through the origin of the multitrack disk (3), delivering the information relating to the number of revolutions during said passage through the origin, if necessary after transcoding, and finally repeating the foregoing operations throughout the duration of the process.

3. Process according to any one of claims 1 and 2, characterised in that initialization involves, at the beginning of commissioning following a stoppage or an involuntary interruption in its operating sequence, recognising the data stored in the up-counting and down-counting module (8) connected to a back-up supply (11) preparing from these data the information relating to the number of revolutions as a function of the user's counting system and of the absolute position in the revolution and finally outputting the information relating to the number of revolutions, if necessary after transcoding, the absolute position in the revolution being delivered independently and continuously after commissioning of said process.

4. Autonomous sensor for the angular, multi-revolution and psuedo-absolute position, employing the process according to any one of claims 1 to 3, characterized in that it essentially consists of a device (12) for determining the absolute position in the revolution, with a coded multitrack disk (3) integral with the shaft (2) and a corresponding multitrack reading cell (4), of a device (13) for determining the direction of rotation and for counting the number of revolutions which is independent of the first device (12), with a disk (5) provided with at least one coded track (6,6') also integral with the shaft (2) but of which the origin is offset relative to that of the multitrack disk (3), and with at least one reading cell (7,7') connected to an up-counting and down-counting module, of an interface device (14) for coding the information issuing from the two preceding devices (12 and 13) and the delivery of corresponding adapted signals and finally of an autonomous back-up supply device (15), the data relating to the number of revolutions being interpreted by a processing unit (10) as a function, in particular, of data delivered by the device (12) for determining the absolute position, the resultant information relating to the number of revolutions performed being prepared by anticipation so as to allow the information issuing from the two determination devices (12 and 13) to be synchronised.

5. Sensor according to claim 4, characterized in that the determination devices (12 and 13) comprise a device (8,10,20) for converting and/or recognising and/or processing the data read, said shaft (2) being mounted freely rotatably on a frame (18) by means of at least one sliding bearing (19, 19') which is advantageously prestressed.

6. Sensor according to claim 5, characterized in that the information issuing from the device (12) for determining the absolute position in the revolution being transferred directly and continuously to the interface device (14).

7. Sensor according to claim 5, characterized in that the content of the up-counting and down-counting module (8) is output periodically by the processing unit (10), the processing unit (10) transmitting the information relating to the number of revolutions to the interface device (14) each time the multitrack disk (3) passes through its origin O.

8. Sensor according to any one of claims 5 to 7, characterized in that the origin O' of the disk (5), set into rotation relative to the origin O of the multitrack disk (3), allows the processing unit (10) to determine approximately, as a function of the content of the up-counting and down-counting module (8) and of the direction of rotation of the shaft (2), the position of the shaft (2) in the revolution and, if necessary, to prepare the information relating to the number of revolutions before each passage through the origin of the multitrack disk (3).

9. Sensor according to any one of claims 4 to 8, characterized in that the autonomous supply and back-up device (15) comprises, on the one hand, an electrical energy accumulator (22) which is rechargeable to a controlled level and is provided, if necessary, with a transformer and supply regulator block and, on the other hand, a long-duration emergency supply device (11) capable of supplying the device (13) for determining the direction of rotation and counting the number of revolutions when the charge level of the electrical energy accumulator (22) drops below a critical threshold.

10. Sensor according to any one of claims 4 to 9, characterized in that the interface device (14) consists, on the one hand, of devices (24) allowing transcoding and, on the other hand, of an outlet stage (25) allowing adaptation of the informative output signals from the sensor (1).

11. Autonomous angular position sensor according to any one of claims 4 to 10, characterized in that the interface device (14) is programmable by means of an external control desk, for example, to the level of the resolution in the revolution and/or to the level of the maximum number of revolutions to display.

12. Autonomous angular position sensor according to any one of claims 4 to 11, characterized in that the interface device (14) has programmable thresholds.

13. Sensor according to any one of claims 5 to 12, characterized in that the interface device (14) and the supply and back-up device (15) are also mounted on one or more stationary electronic cards (26, 27), all the electronic cards (16, 17, 26 and 27) being interconnected and having a configuration adapted to that of the frame (18) of the sensor (1) so as to produce a compact structure.

14. Sensor according to any one of claims 4 to 13, characterized in that it is also provided with a device (29) for adjusting the origin O to at least two levels of approximation equipped with signalling indicators (30) for indicating the approximation and implementation of the adjustment, connected to a comparator module (23).
